Europäisches Patentamt

European Patent Office

Office européen des brevets

(19)

(11) Publication number: 0 275 190
A2

## (12) EUROPEAN PATENT APPLICATION

(21) Application number: 88300245.3

(22) Date of filing: 13.01.88

(51) Int. Cl.⁴: H 02 P 3/24

(30) Priority: 16.01.87 GB 8701035

(43) Date of publication of application:
20.07.88 Bulletin 88/29

(84) Designated Contracting States:
AT BE CH DE ES FR GB GR IT LI LU NL SE

(71) Applicant: Yang, Tai-Her
5-1 Taipin Street
Si-Hu Town Dzan-Hwa (TW)

(72) Inventor: Yang, Tai-Her
5-1 Taipin Street
Si-Hu Town Dzan-Hwa (TW)

(74) Representative: Arthur, Bryan Edward et al
Withers & Rogers 4 Dyer's Buildings Holborn
London EC1N 2JT (GB)

(54) Improvements in single phase induction motors.

(57) This abstract will refer to Fig 1 of the drawings.

A single phase induction motor has a main winding WR and a starting winding WS and is provided with a braking circuit comprising a rectifier CR103 arranged to charge a capacitor C105 through a current limiting resistor R104.

A centrifugal switch FS106 connects the starter winding WS into the circuit at starting but cuts it out when the speed increases and allows the capacitor C105 to become charged.

The main switch SW102 controlling the motor is a double throw switch and when it is open to stop the motor it allows the capacitor C105 to discharge through the main winding WR and produce any current braking. As the speed drops the centrifugal switch FS106 also switches back and allows the capacitor discharge current also to flow through the starter winding WS increasing the braking effect.

The application of the invention to a split phase motor is also described.

FIG. 1

EP 0 275 190 A2

# Description

## IMPROVEMENTS IN SINGLE PHASE INDUCTION MOTORS

The invention relates to single phase induction motors particularly small motors of the kind that are used for drilling machines, grinders and small power stools.

When such a motor is switched off particularly if it is driving a load of high inertia it may take a considerable time to come to a stop, this is often inconvenient and may impose a safety threat.

In patent No GB 1050585 a circuit is disclosed including a capacitor, a rectifier and a current limiting resistor, connected in series across the motor supply. The motor is controlled by a double throw switch, in that case comprising the contacts of a relay, and when the motor is switched off the second contacts of the switch allow the capacitor to discharge through the motor winding providing any current braking.

It is an object of the present invention to provide an improved circuit of this kind.

The invention is defined in the claims appended hereto, and embodiments of it will be described with reference to the 3 figures of the accompanying drawings which show different forms of motor braking circuits.

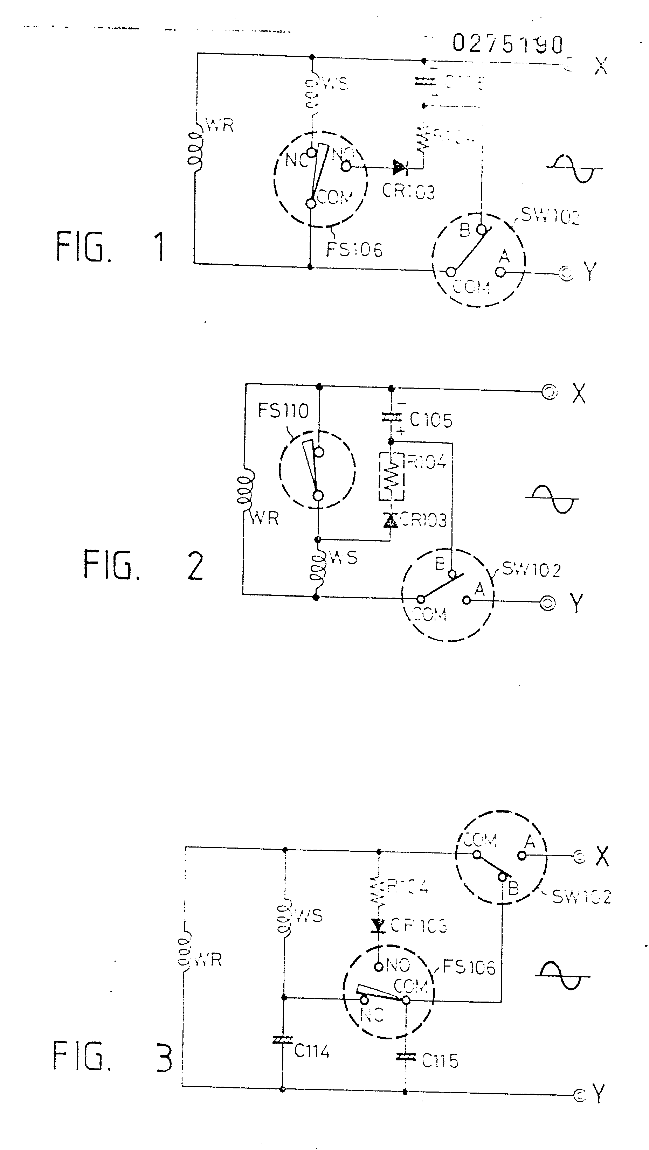

Referring first to Fig 1, the main winding WR of a motor is connected between supply terminals XY through a switch SW102. The switch is a double throw switch in which the common pole COM may be connected to contact A for normal running and to contact B when the motor is to be brought to a stand still. The motor also has a starting winding WS which is connected across the supply through a centrifugal switch FS106 while the motor is at rest or rotating at only a low speed.

The switch FS106 is also of the double throw type in which the common pole COM is connected to a normally closed contact NC for supplying current to the starting winding WS when the motor is at rest or rotating at a low speed, and a normally open contact which closes when the motor runs up to a preset threshold speed.

The normally open contact of the switch FS106 is connected to a charging circuit comprising a rectifier CP103 and a current limiting resistor R104 through which a capacitor C105 is charged when the contact NO is closed.

In operation, when the motor is switched on by connecting the common pole of the switch SW102 to contact A, power is applied to the main winding WR and the starting winding WS to start a motor. At this stage no current flows into the capacitor C105.

When the motor runs up to it's preset threshold speed the centrifugal switch FS106 switches over thereby cutting out the starting winding but connecting the charging circuit comprising the rectifier CR103 and the limiting resistor R104 to the supply terminal Y, and causing the capacitor C105 to become charged.

When the motor is to be switched off, the switch SW102 is switched so that the common pole of the switch is disconnected from A and connected to B.

This disconnects the motor windings from the terminal Y of the power supply and allows the capacitor C105 to discharge through the main winding WR and so braking the motor. As the motor speed falls, the braking effect would normally be much reduced, but when the threshold speed is reached, the contact of the centrifugal switch switchover allowing the capacitor discharge current also to flow through the starting winding WS again increasing the braking effect.

Fig 2 shows a modified circuit in which the centrifugal switch FS110 has a single set of normally closed contacts and is in parallel with the charging circuit for the capacitor. Operation of this circuit is generally similar to that of Fig 1 and, at starting, current flows through the main winding WR and the starting winding WS. The charging circuit is thus inoperative since it is effectively short circuited by the contacts of the centrifugal switch FS110.

When the threshold speed is reached, and the switch FS110 opens, the capacitor C105 starts to charge through the rectifier CR103 and the impedance of the starting winding WS and the current limiting resistor R104. As in the case of the embodiment of Fig 1, when the motor is switched off the capacitor C105 discharges, at first through the main winding WR and then when the centrifugal switch FS110 closes through the winding WS in addition.

In this embodiment, since the impedance of the starting winding WS is in series with the rectifier, the current limiting resistor R104 may be of lower value or in some cases may be omitted altogether.

Fig 3 shows the application of the invention to a split phase induction motor. In this figure, as before, WR is the main winding of the motor and WS is a quadrature winding in series with a phase splitting capacitor C114. The centrifugal switch FS106 is a double throw switch which in its normally closed position that is to say when the motor is stationery or rotating at a low speed places an additional capacitor C115 in parallel with the capacitor C114, thus improving the starting and low speed characteristic of the motor.

When the motor speed reaches the preset threshold value the centrifugal switch FS106 disconnects the capacitor C115 from the quadrature winding and connects it to the charging circuit consisting of the rectifier CR103 with its current limiting resistor R104 and this capacitor then becomes charged to the peak to peak supply voltage.

On operating the main switch SW102 to stop the motor the capacitor is connected across the main winding WR producing a braking effect and then as the motor slows down to the threshold speed the centrifugal switch FS106 closes allowing capacitor current also to flow through the quadrature winding WS to give a further braking effect.

It will be noted that in all these embodiments the charging circuit is inoperative at starting and therefore does not impose any additional load on the supply at this time.

## Claims

1 A single phase induction motor provided with a braking circuit comprising a capacitor (C105) charged through a rectifier (CR103) and a current limiting impedance (R104) from the motor supply and arrange to supply a DC braking voltage to the motor when its current is switched off, characterised in that a centrifugal switch (FS106) supplies charging current to the braking circuit only when the motor speed exceeds a preset threshold.

2 A single phase induction motor according to claim 1 having separate running (WR) and starting (WS) windings and in which the centrifugal switch also disconnects the starting winding (WS) when the motor exceeds the threshold speed.

3 A single phase induction motor according to claim 1 in which the motor is a split phase motor having a phase spliting capacitor (C114) in series with one winding (WS) and in which the centrifugal switch connects a capacitor (C115) in parallel with the phase spliting capacitor below the threshold speed and connects it into the braking circuit to become charged so as to serve as the braking capacitor above the threshold speed.

0275190

FIG. 1

FIG. 2

FIG. 3